# EUROPEAN PATENT APPLICATION

(11) **EP 4 604 368 A1**
(43) Date of publication of application: **20.08.2025**
(21) Application number: 24157402.9
(22) Date of filing: 13.02.2024
(51) Int. Cl.: H02K 7/00, H01F 38/18, H02K 7/08, H02K 11/215, H02K 11/225, H02K 19/12

(54) **A ROTOR FOR AN ELECTRIC MOTOR**

(71) Applicant: Polestar Performance AB, 405 31 Gothenburg (SE)
(72) Inventor: STENVALL, Lars, 459 93 Ljungskile (SE)
(74) Representative: Zacco Sweden AB

(57) **Abstract**

The present disclosure relates to a rotor (1) for an electric motor, the rotor comprising a hollow rotor shaft (2), a rotor core (3) accommodating the rotor shaft (2) and a rotor position sensor (10) for monitoring an angular position of the rotor. Further, the rotor position sensor (10) is positioned at an interior of said hollow rotor shaft (2), the hollow rotor shaft (2) circumferentially enclosing said rotor position sensor (10).

## Description

### TECHNICAL FIELD

The present disclosure relates to a rotor and a method for manufacturing a rotor.

### BACKGROUND

The rotor in an electric motor of a vehicle plays a crucial role in converting electrical energy into mechanical motion. As the stator generates a rotating magnetic field, the rotor interacts with this field. This interaction induces a force on the rotor, causing it to spin. The rotational movement of the rotor is then transferred to an output shaft, enabling it to perform mechanical work or drive a load. In essence, the rotor is the dynamic component that transforms electrical input into useful rotational output in the functioning of an electric motor.

Rotors utilize rotor position sensors to provide accurate feedback on the precise position of the rotor. This information can be used for optimizing the motor's performance, enabling precise control of the electrical currents supplied to the stator windings and ensuring efficient torque production. Generally, a rotor position sensor enhances overall accuracy, responsiveness, and stability.

However, an issue with the rotor position sensors of the present art is that they occupy a lot of space, which results in that the rotor becomes bulkier. Accordingly, rotors of the present art have the rotor position sensor configured in a manner that requires the rotor shaft to be longer, making it bulkier.

Accordingly, there is room for rotors having rotor position sensors to explore the domain of providing a more compact rotor having a rotor position sensor.

Even though previous solutions may work well in some situations, it would be desirable to provide a more compact rotor while maintaining the rotor position sensor attached thereto.

### SUMMARY

It is therefore an object of the present disclosure to alleviate at least some of the mentioned drawbacks to provide an improved rotor, electric motor and method for manufacturing a rotor.

This and other objects, which will become apparent in the following, are achieved by a rotor, an electric motor and a method as defined in the appended claims. The present disclosure is at least partly based on the insight that by attaching the rotor position sensor within the rotor shaft, the rotor will at least be more compact.

The present disclosure relates to a rotor for an electric motor, the rotor comprising a hollow rotor shaft, a rotor core accommodating the rotor shaft and a rotor position sensor for monitoring an angular/rotational position of the rotor. Further, the rotor position sensor is positioned at an interior of said hollow rotor shaft. The hollow rotor shaft circumferentially enclosing said rotor position sensor.

Preferably, the hollow rotor shaft fully encloses the rotor position sensor circumferentially. In other words, preferably, the hollow rotor shaft encircles all parts of the rotor position sensor.

Advantageously, the rotor position sensor is attached to the rotor in a compact manner while simultaneously being protected from the rotor outer environment.

Further, at least a first part of the rotor position sensor may be fixed/affixed to the rotor shaft, preferably via a rotor shaft bearing. Such a rotor shaft bearing may be arranged to enable the rotor shaft to rotate relative to an electric motor housing.

At least said first part of the position sensor may form a keyed connection to an inner circumferential surface of said rotor shaft and/or is sandwiched between said rotor shaft bearing and a recess formed in said inner circumferential surface of said rotor shaft, thereby axially and/or angularly securing the first part. Thus, in some aspects, one of the shaft and the position sensor may form a keyway, and the other of the shaft and the position sensor may form a key adapted to fit in said keyway. The keyway may be axially extending along an axial axis of the rotor.

Advantageously, at least the first part may be properly secured to the rotor shaft.

The rotor position sensor may be an induction based rotor position sensor or a Hall Effect sensor.

In some aspects, the rotor position sensor comprises a first part and a second part, the first part being a target ring, the second part being a target ring sensor, wherein in such an aspect the target ring is arranged to rotate with said rotor shaft, wherein the target ring sensor is stationary relative to the rotor shaft, e.g. fixed to the rotor housing. The target ring sensor may be arranged to output sensor data, which may be utilized to determine an angular position of the rotor. Accordingly, the target ring sensor, may based on interaction when having a rotating motion/displacement relative to the target ring (such as inductive interaction or any other suitable type of electromagnetic interaction) with the target ring output said sensor data which may be indicative of an angular position of the rotor. The target ring sensor may form a wired or wireless connection to a control circuitry, which may be arranged to obtain sensor data outputted by the target ring sensor and configured to determine the angular position of the rotor based on said obtained sensor data. The rotor position sensor output data may also be utilized for monitoring rotor speed.

The rotor may extend along an axial axis, wherein the rotor comprises a rotor shaft bearing having a first race and a second race (which may also be referred to as outer and inner rings, which are rotatable relative to each other through e.g. rollers or balls arranged there between). The first race being connected to said rotor shaft (directly, or indirectly via a dielectric cover), the second race being arranged to be fixed, directly or indirectly, to an electric motor housing, thereby the first race is rotatable relative to the second race. The first race may be an outer race and the second race may be an inner race the outer race encircling the inner race. Accordingly, the target ring may be attached to said first race and/or said inner circumferential surface of said shaft to rotate relative to the target ring sensor.

Advantageously, this enables the target ring to be pre-assembled to the rotor shaft bearing allowing a more efficient assembling of the rotor.

In some aspects, the rotor may be an electrically excited rotor further comprising a power transmitting device, the power transmitting device comprising a static transmitter and a rotary receiver, the static transmitter being configured to contactless transmit AC power to said rotary receiver. Preferably, "contactless transmit" is induction. The rotary receiver may further be arranged to transmit said alternating current (AC) power towards windings of said rotor via a rectifier board which is arranged to rectify said AC power to direct current (DC) power. Further, the static transmitter may be attached to said electric motor housing and the rotary receiver may be attached to an inner circumferential surface of said rotor shaft.

The rotary receiver and at least a part of the static transmitter may be positioned at said interior of said hollow rotor shaft, the hollow rotor shaft circumferentially enclosing said rotary receiver and at least a part of the static transmitter.

Accordingly, the rotor herein may have the power transmitting device and the rotor position sensor at said interior.

Further, the rotor position sensor may, along said axial axis, be intermediate said rotor shaft bearing and said power transmitting device. In some aspects, the rotor shaft bearing may be connected to said inner circumferential surface of said rotor shaft. Accordingly, the first race may be directly connected to said inner circumferential surface of said rotor shaft to rotate with said shaft relative to said second race. Then, the second race may be connected, directly or indirectly, to said electric motor housing and said static transmitter.

Accordingly, the static transmitter may be static/stationary at said rotor interior by attachment to the second race of the bearing.

In some aspects, the target ring sensor is attached to said static transmitter, at a portion of the static transmitter being at said interior of said rotor shaft.

Advantageously, the target ring sensor (which is also arranged to be static/stationary so that the rotor shaft rotates relative to the sensor) and the static transmitter may be positioned at said interior of said shaft in a compact manner avoiding the use of excessive components. This may be enabled by that said target ring sensor is attached to said static transmitter.

The static transmitter may comprise a rod part and a first coil part extending from an end of the rod part, the rod part comprising power means for providing AC power from a power source to said first coil part, the first coil part being arranged to contactless transmit said AC power to said rotary receiver. Further, the rod part may be fixed to said electric motor housing and said second race of said bearing, directly, or indirectly via the electric motor housing.

The rod part may be formed by a ferrite core. The rotary receiver may comprise a ferrite core with a second coil part wound therearound. The power transfer between the static transmitter and the rotary receiver may be radial inductive power transfer by said coil parts. Accordingly, the static transmitter and the rotary receiver may be adjacent to each other so to enable contactless power transfer. Preferably, as disclosed herein, the rotary receiver may be attached to an inner circumferential surface of said rotor shaft. However, the rotary receiver may be attached to said inner circumferential surface via a dielectric cover or the like, so to prevent direct contact between any conductive parts of the rotary receiver and the rotor shaft. The rotary receiver may generally be formed as a cylinder with a center opening which is arranged to circumfere the rod part of the static transmitter for said radial power transfer. Accordingly, a compact configuration is obtained.

The target ring may comprise a communication part and an isolation disc, wherein the isolation disc is dimensioned to isolate the communication part from said rotor bearing. The isolation disc may be attached to said first race, the communication part being axially displaced relative to said isolation disc. The target ring may be formed in one-piece, forming an integral structure.

Advantageously, as the target ring comprises such an isolation disc to prevent any electromagnetic interference from the bearing to the rotor position sensor, the rotor position sensor will generally operate with great accuracy.

The second race of the rotor bearing may enclose an end-cover stub axle of said electric motor housing, wherein the first race of said rotor bearing radially encloses said second race, wherein the end-cover stub axle and said rotor bearing jointly plug/seal/close an open end of said rotor shaft.

Accordingly, the rotor shaft can be enclosed by components actively used in its configuration, thereby there is no need for an exclusive rotor shaft cover which minimizes the weight of the rotor.

The end-cover stub axle may extend into said rotor shaft, wherein the static transmitter device is attached to said end-cover stub axle. Accordingly, the static transmitter device may also extend into said rotor shaft.

The present disclosure further provides an electric motor comprising the rotor according to any one of the aspects herein.

Further, the present disclosure provides a method for manufacturing a rotor according to any aspect herein, comprising the steps of:
- providing a rotor shaft and a rotor position sensor;
- inserting the rotor position sensor into the rotor shaft.

In some aspects, the rotor position sensor comprises a target ring and a target ring sensor, wherein prior to inserting the rotor position sensor into the rotor shaft, the method comprises the steps of:
- providing a rotor shaft bearing and an end-cover stub axle;
- attaching the target ring to a first race of said rotor shaft bearing which is arranged to rotate relative to a second race of said rotor shaft bearing;
- attaching the second race of the rotor shaft bearing to an end-cover stub axle;
wherein the step of inserting is performed to enable an inner circumferential surface of the rotor shaft to be connected to said first race of said rotor shaft bearing, thereby allowing the rotor shaft and the target ring to rotate relative to the end-cover stub axle.

In some aspects, the method may further comprise the step of providing a pre-assembled unit. Accordingly, the power transmitting device, end-cover stub axle and rotor position sensor may form said pre-assembled unit which is arranged to be inserted into the rotor shaft during the step of inserting. The power transmitting device may comprise busbars and a rectifier board wherein the busbars are arranged to protrude out from the rotor shaft to contact the rotor winding.

As may appreciated by a skilled person in the art, the method may comprise connecting the rotor shaft to a rotor core such that the rotor core accommodates the rotor shaft.

### BRIEF DESCRIPTION OF THE DRAWINGS

These and other features and advantages of the present disclosure will now be further clarified and described in more detail, with reference to the appended drawings;
- Figure 1: illustrates an electric motor in accordance with some aspect of the present disclosure;
- Figure 2: illustrates a cut-out side cross-sectional view of a rotor shaft for a rotor in accordance with some aspects of the present disclosure;
- Figure 3: illustrates an exploded view of a rotor shaft in accordance with some aspects of the present disclosure; and
- Figure 4: illustrates a method for manufacturing a rotor in the form of a schematic flowchart.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV. Further, the term "electric vehicle" may refer to a plug-in hybrid vehicle, also referred to as a PHEV. Further, the term "electric vehicle" may refer to a hybrid vehicle, also referred to as a HEV, where a hybrid vehicle refers to a vehicle utilizing multiple propulsion sources one of which is an electric drive system.

The term "radially" may refer to a direction perpendicularly outward from a central point or axial axis, specifically a central axis of a circular structure. For instance, if a line is drawn from a center of a circle to its circumference or from its circumference outwards, those lines may be considered as extending radially.

The term "axially" may refer to a direction along or parallel to an axial axis or central line. Specifically, parallel to or along a central line or axis of a circular structure.

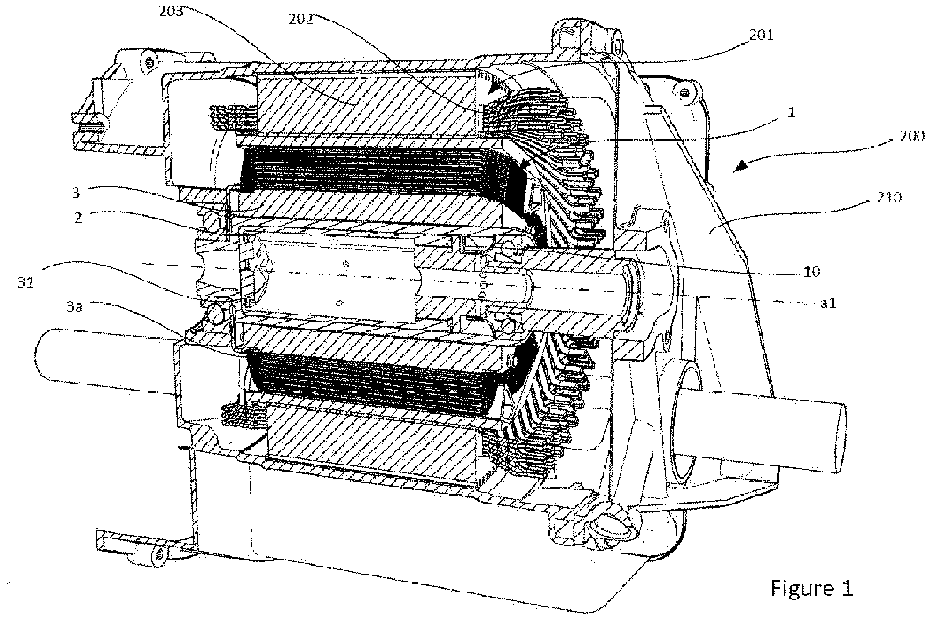

Figure 1 illustrates an electric motor 200 comprising a rotor 1 in accordance with aspects of the present disclosure, the electric motor 200 is depicted from an objective view in which the electric motor 200 is laterally cross-sectioned. The electric motor of Figure 1 is an electrically excited synchronous motor (EESM). The electric motor 200 comprises a rotor 1 and a stator 201 accommodating the rotor 1. The stator 201 comprising a stator core 203 and stator windings 202 distributed about the stator core 203. During an active state of said electric motor 200 the rotor 1 is arranged to rotate relative the stator 201 for powering propulsion of an electric vehicle comprising said electric motor 200.

The term "winding" used within the context of the present disclosure may refer to any suitable type of winding capable of carrying alternating current (AC) or direct current (DC). The winding may be e.g. a hairpin winding or any other suitable type of winding.

Figure 1 further illustrates that the electric motor 200 comprises an electric motor housing 210 which surrounds the electric motor 200. The electric motor housing 210 may be fastened to any suitable portion of a vehicle 200 by e.g. fastening means such as bolts and nuts. As apparent by a skilled person in the art the electric motor may comprise further components such as an inverter, cabling for transmission of power from a battery pack etc.

The rotor 1 of the electric motor 200 of Figure 1 comprises a rotor winding 3a wound about the rotor core 3 which accommodates the rotor shaft 2. Figure 1 further illustrates that a rotor position sensor 10 for monitoring an angular position of the rotor is positioned at an interior of said hollow rotor shaft 2, the hollow rotor shaft 2 circumferentially enclosing said rotor position sensor 10.

As illustrated in Figure 1, as the rotor position sensor 10 is fully within an interior of the rotor shaft 1 space efficiency is achieved. The limited space within the electric motor 200 is apparent by Figure 1. Hence, by arranging the rotor position sensor 10 so that the rotor shaft 2 fully encircles said sensor 10, the limited space can be utilized optimally.

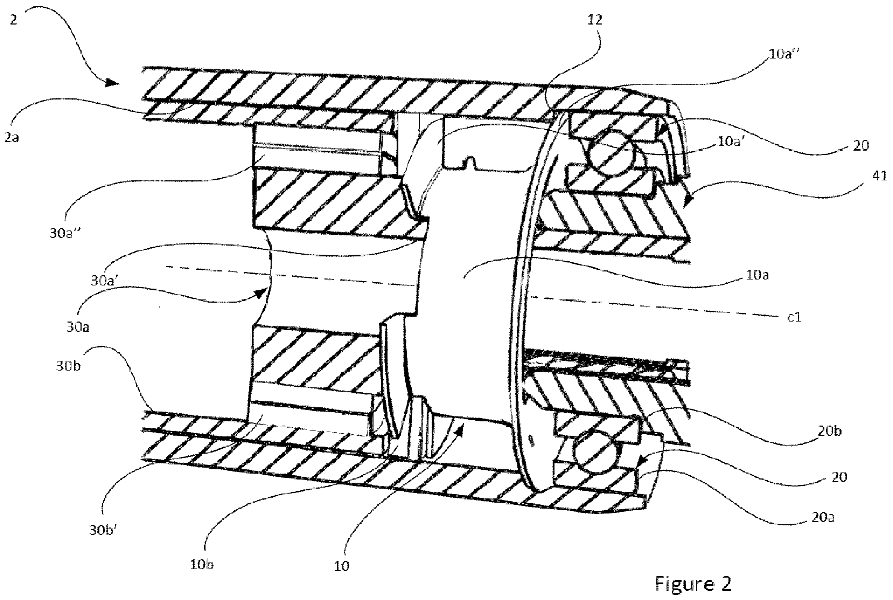

Figure 2 illustrates a partial side cross-sectional view of a rotor shaft 2. The rotor shaft 2 may be the rotor shaft 2 of Figure 1.

Figure 2 illustrates that the inner circumferential surface 2a of said rotor shaft 2 may fully encircle the rotor position sensor 10. Accordingly, the rotor position sensor 10 in Figure 2 does not protrude out from the rotor shaft 2.

Figure 2 further illustrates that the rotor position sensor 10 may comprise at least a first part 10a. Figure 2 illustrates that the first part 10a is sandwiched between said rotor shaft bearing 20 and a recess/indentation 12 formed in said inner circumferential surface 2a of said rotor shaft 2, thereby axially securing the first part 10a therebetween. The recess 12 may be an annular recess as illustrated in Figure 2.

In some aspects not illustrated in Figure 2, the first part 10a of the position sensor forms a keyed connection to the inner circumferential surface 2a of said rotor shaft 2. The keyed connection may be provided directly by that the first part of the rotor position sensor 10a comprises e.g. a keyway (for communication with a key on the shaft) or indirectly by that e.g. the rotor shaft bearing 20 comprises a keyway or the like such that the bearing 20 forms said keyed connection and the rotor position sensor first part 10a forms a keyed connection to the rotor shaft 2 via the rotor shaft bearing 20.

In Figure 2, the rotor position sensor 10a comprises also a second part 10b. The first part 10a being a target ring, the second part 10b being a target ring sensor, wherein the target ring 10a is arranged to rotate with said rotor shaft 2, wherein the target ring sensor 10b is stationary relative the rotor shaft 2.

Accordingly, based on such a configuration the rotor position sensor 10 may be a Hall Effect sensor (i.e. transducer based sensor), an induction based sensor or any other suitable sensor such as an optical encoder. The rotor position sensor 10 herein generally is configured to determine and monitor the position of the rotor. The target ring sensor 10b which is stationary may be arranged to provide real-time feedback/output data to control circuitry (such as an electronic control unit of an EV) so that the position of the rotor 1 can be monitored and controlled. Accordingly, this enables an electric motor to optimize timing of current flow (both current flow of the stator and the rotor).

Figure 2 further illustrates that the rotor 2 extends along an axial axis c1. Further, Figure 2 illustrates that the rotor 1 comprises a rotor shaft bearing 20 having a first race 20a and a second race 20b, the first race being 20a connected to said rotor shaft 2, the second race 20b being arranged to be fixed, directly or indirectly, to an electric motor housing, thereby the first race 20a is rotatable relative the second race 20b. Figure 2 illustrates that the target ring 10a is attached to said first race 20a such that the target ring 10a is rotatable relative the target ring sensor 10b which in Figure 2 is stationary attached such that it does not rotate with the rotor 1. In other aspects the target ring 10a may be attached to said inner circumferential surface 2a of said shaft 2.

Figure 2 further illustrates that the rotor 1 may be an electrically excited rotor arranged to receive DC current at windings thereof. Accordingly, the rotor 1 further comprises a power transmitting device 30. The power transmitting device 30 comprising a static transmitter 30a and a rotary receiver 30b. The static transmitter 30a being configured to contactless transmit AC power to said rotary receiver 30b. The AC power is received from a power source, i.e. a battery pack of an electric vehicle. The rotary receiver 30b being arranged to transmit said AC power towards windings of said rotor 1 via a rectifier board 31 (see Figure 1) which is arranged to rectify said AC power to DC power. The rectifier board 31 may be connected to windings of the rotor by means of busbars so that DC power can be transferred from the recitifer board 31 to the windings of the rotor 1. The static transmitter 30a is attached to said electric motor housing and the rotary receiver 30b is attached to an inner circumferential surface 2a of said rotor shaft 2. Further, as illustrated in Figure 2, the rotary receiver 30b and at least a part of the static transmitter 30a are positioned at said interior of said hollow rotor shaft 2, the hollow rotor shaft 2 circumferentially enclosing said rotary receiver (fully) 30b and at least a part of the static transmitter 30a.

For clarification purposes in view of Figure 2, upon rotation of the rotor shaft 2, the rotary receiver 30b, the target ring 10a and the first race of the bearing 20a rotate with the rotor shaft 2, whereas the inner race 20b, the sensor 10b and the static transmitter 30a will be static relative the rotor shaft 2 / rotor 1.

Figure 2 further illustrates that the rotor position sensor 10 is, along said axial axis c1, intermediate said rotor shaft bearing 20 and said power transmitting device 30. Thereby, being generally at a sealed environment such that it is protected from dust and dirt. This is beneficial in order to allow the rotor position sensor 10 to have longevity.

Figure 2 further illustrates that the rotor shaft bearing 20 is connected to said inner circumferential surface 2a of said rotor shaft 2 wherein the first race 20a is directly connected to said inner circumferential surface 2a of said rotor shaft to rotate with said shaft 2 relative said second race 20b, the second race 20b being connected, directly or indirectly, to said electric motor housing and said static transmitter 30a. Accordingly, Figure 2 illustrates that the target ring sensor 10b is attached to said static transmitter 30a, at a portion of the static transmitter 30a being at said interior of said rotor shaft 2.

Specifically, the static transmitter 30a in Figure 2 comprise a rod part 30a' and a first coil part 30a", extending from an end of the rod part 30a'. The rod part 30a' comprising power means (e.g. wires/cables electrically connected to a power source) for providing AC power from the power source to said first coil part 30a", the first coil part 30a" being arranged to contactless transmit said AC power to said rotary receiver 30b, preferably by induction. Figure 2 further illustrates that the rotary receiver 30b also comprises a second coil part 30b' for enabling inductive power transfer from the static transmitter 30a to the rotary receiver 30a. This configuration enables the rotary receiver 30b to rotate relative the static transmitter 30a.

Figure 2 further illustrates that the target ring 10a comprises a communication part and an isolation disc 10a', 10a", the isolation disc 10a" being dimensioned to isolate the communication part from said rotor bearing 20, the communication part 10a' being axially displaced relative said isolation disc 10a", wherein the isolation disc 10a' is attached to said first race 20a. The communication part 10a' is adjacent the sensor 10b so to interact with the sensor 10b to enable the sensor 10b to output sensor data indicative of rotor angular position.

Accordingly, this enables the rotor position sensor 10 to be within the rotor shaft 2 (and connected to a conductive element) without being electromagnetically interfered by the rotor shaft bearing 20 which usually is formed by a conductive metal.

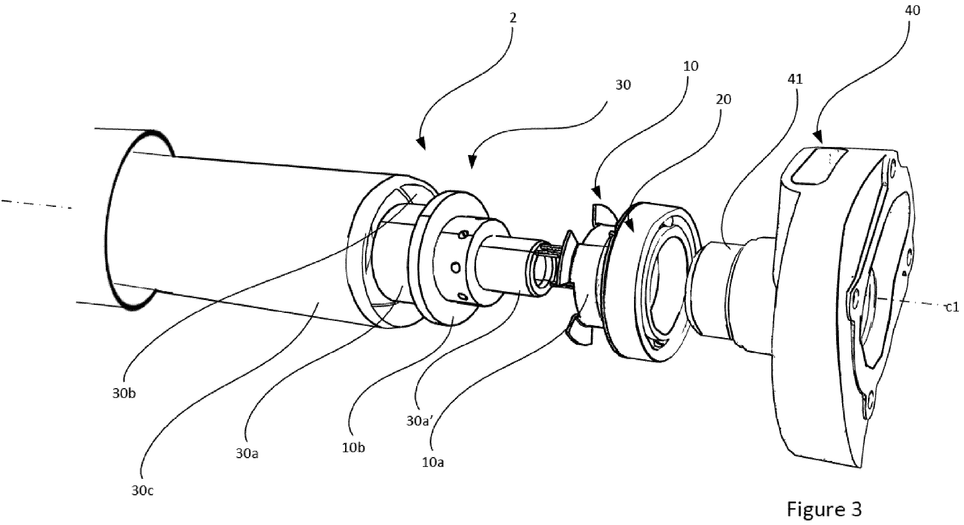

Figure 3 illustrates an objective exploded view of the rotor shaft 2 as shown in Figure 2 wherein only a part of the shaft 2 is illustrated. Accordingly, Figure 3 illustrates that the rotary receiver 30b may form a hollow cylinder for insertion into the rotor shaft 2. Further, Figure 3 illustrates that the static transmitter 30a may be arranged to be radially enclosed by the rotary receiver 30b. The static transmitter 30a may be fixed to said electric motor housing 40 via an end-cover stub axle 41 which is integral or integrated to the housing 40. The end-cover stub axle 41 and said rotor bearing 20 may be arranged to jointly plug an open end of said rotor shaft 2. Hence, the second race 20b of the bearing 20 may be attached to the end-cover stub axle 41 (for example by press-fit). The end-cover stub axle 41 is arranged to extend into said rotor shaft 2, wherein the static transmitter device 30b is arranged to be attached to said end-cover stub axle 41. Figure 3 further illustrates that the static transmitter 30a may be connected to the target ring sensor 10b, wherein the target ring 10a is attached to the rotor shaft 2 (via the bearing 20) so to rotate with the rotor shaft 2 relative the target ring sensor 10b and the static transmitter 30a. The rotary receiver 30b is also attached to the rotor shaft 2 to rotate relative the target ring sensor 10b and the static transmitter 30a. Figure 3 also illustrates the rod part 30a' of the static transmitter 30a which is arranged to connect to said end-cover stub axle 41. Figure 3 further illustrates that the rotor position sensor 10 may be intermediate the power transmitting device 30 and the bearing 20. Figure 3 further illustrates that the rotary receiver 30b may be attached to said inner circumferential surface 2a via a dielectric cover 30c or the like, so to prevent direct contact between any conductive parts of the rotary receiver and the rotor shaft 2. The rotary receiver 30b may be attached to an inner surface of said dielectric cover 30c. The dielectric cover 30c may be attached, e.g. by press-fit to said inner circumferential surface 2a of said shaft 2.

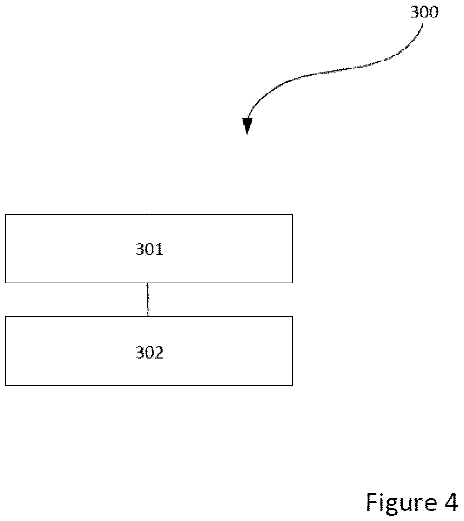

Figure 4 illustrates in the form of a flowchart a method for manufacturing the rotor according to any aspect herein comprising the steps of providing 301 said rotor shaft and said rotor position sensor; inserting 302 the rotor position sensor into the rotor shaft. Accordingly, the rotor position sensor will be at an interior of said rotor shaft.

## Claims

1. A rotor (1) for an electric motor, the rotor comprising:
- a hollow rotor shaft (2);
- a rotor core (3) accommodating the rotor shaft (2);
- a rotor position sensor (10) for monitoring an angular position of the rotor;
wherein the rotor position sensor (10) is positioned at an interior of said hollow rotor shaft (2), the hollow rotor shaft (2) circumferentially enclosing said rotor position sensor (10).

2. The rotor (1) according to claim 1, wherein at least a first part (10a) of the position sensor (10) is fixed to the rotor shaft (2), preferably via a rotor shaft bearing (20).

3. The rotor (1) according to claim 1 or 2, wherein at least said first part (10a) of the position sensor forms a keyed connection to an inner circumferential surface (2a) of said rotor shaft (2) and/or is sandwiched between said rotor shaft bearing (20) and a recess (12) formed in said inner circumferential surface (2a) of said rotor shaft (2), thereby axially securing the first part (10a).

4. The rotor (1) according to any one of the preceding claims, wherein the rotor position sensor (10) is an induction based rotor position sensor or a Hall effect sensor.

5. The rotor (1) according to any one of the preceding claims, wherein the rotor position sensor (10a) comprises a first part (10a) and a second part (10b), the first part (10a) being a target ring, the second part (10b) being a target ring sensor, wherein the target ring (10a) is arranged to rotate with said rotor shaft (2), wherein the target ring sensor (10b) is stationary relative to the rotor shaft (2).

6. The rotor according to claim 5, wherein the rotor (2) extends along an axial axis (c1), wherein the rotor (1) comprises a rotor shaft bearing (20) having a first race (20a) and a second race (20b), the first race being (20a) connected to said rotor shaft (2), the second race (20b) being arranged to be fixed, directly or indirectly, to an electric motor housing (40), thereby the first race (20a) is rotatable relative to the second race (20b)
wherein, the target ring (10a) is attached to said first race (20a) and/or said inner circumferential surface (2a) of said shaft (2) to rotate relative to the target ring sensor (10b).

7. The rotor according to claims 5 and 6, wherein the rotor (2) further comprises a power transmitting device (30),
the power transmitting device (30) comprising a static transmitter (30a) and a rotary receiver (30b), the static transmitter (30a) being configured to contactless transmit AC power to said rotary receiver (30b),
the rotary receiver (30b) being arranged to transmit said AC power towards windings of said rotor (1) via a rectifier board (31) which is arranged to rectify said AC power to DC power
the static transmitter (30a) being attached to said electric motor housing (40) and the rotary receiver (30b) being attached to an inner circumferential surface (2a) of said rotor shaft (2)
wherein the rotary receiver (30b) and at least a part of the static transmitter (30a) are positioned at said interior of said hollow rotor shaft (2), the hollow rotor shaft (2) circumferentially enclosing said rotary receiver (30b) and at least a part of the static transmitter (30a).

8. The rotor (1) according to claim 7, wherein the rotor position sensor (10) is, along said axial axis (c1), intermediate said rotor shaft bearing (20) and said power transmitting device (30).

9. The rotor (1) according to any one of the claims 7-8, wherein the rotor shaft bearing (20) is connected to said inner circumferential surface (2a) of said rotor shaft (2), wherein the first race (20a) is directly connected to said inner circumferential surface (2a) of said rotor shaft (2) to rotate with said shaft (2) relative to said second race (20b), the second race (20b) being connected, directly or indirectly, to said electric motor housing (40) and said static transmitter (30a).

10. The rotor (1) according to any one of the claims 7-9, wherein the target ring sensor (10) is attached to said static transmitter (30a), at a portion of the static transmitter (30a) being at said interior of said rotor shaft (2).

11. The rotor (1) according to claims 7-10, wherein the static transmitter (30a) comprises a rod part (30a') and a first coil part (30a"), extending from an end of the rod part (30a'), the rod part (30a') comprising power means for providing AC power from a power source to said first coil part (30a"), the first coil part (30a") being arranged to contactless transmit said AC power to said rotary receiver (30b)
wherein the rod part (30a') is fixed to said electric motor housing (40) and said second race (20b) of said bearing, directly, or indirectly via the electric motor housing (40).

12. The rotor (1) according to any one of the claims 7-11, wherein the target ring (10a) comprises a communication part and an isolation disc (10a', 10a") dimensioned to isolate the communication part (10a') from said rotor bearing (20), the communication part (10a') being axially displaced relative to said isolation disc (10a"), wherein preferably the isolation disc is attached to said first race.

13. The rotor (1) according to any one of the claims 7-12, wherein the second race (20b) of the rotor bearing (20) encloses an end-cover stub axle (41) of said electric motor housing (40), wherein the first race (20a) of said rotor bearing (20) radially encloses said second race (20b), wherein the end-cover stub axle (41) and said rotor bearing (20) jointly plug an open end of said rotor shaft (2).

14. An electric motor (200) comprising the rotor (1) according to any one of the preceding claims.

15. A method (300) for manufacturing the rotor according to any one of the preceding claims, comprising:
- providing (301) said rotor shaft and said rotor position sensor;
- inserting (302) the rotor position sensor into the rotor shaft.
